# EUROPÄISCHE PATENTANMELDUNG

(11) **EP 1 568 398 A2**
(43) Veröffentlichungstag der Anmeldung: **31.08.2005**
(21) Anmeldenummer: 05004226.6
(22) Anmeldetag: 25.02.2005
(51) Int. Cl.: A62B 25/00

(54) **Klappenanordnung für O2 Maskencontainer**

(30) Priorität: 26.02.2004 DE 102004009346; 03.08.2004 US 598264 P
(71) Anmelder: Airbus Deutschland GmbH, 21129 Hamburg (DE)
(72) Erfinder: Fischer, Hans Joachim, 46149 Oberhausen (DE)
(74) Vertreter: Maiwald Patentanwalts GmbH

(57) **Zusammenfassung**

Klappenordnung für Maskencontainer mit zwei Klappen, wobei die Klappen eine Schwenkachse parallel zur Flugzeuglängsachse aufweisen und weiter als 90° aufschwenkbar sind.

## Beschreibung

Die vorliegende Erfindung betrifft die Unterbringung von Sauerstoffmasken in Sauerstoffcontainer, beispielsweise im Deckenbereich eines Flugzeugs im Versorgungskanalbereich- oder als integrierte Einzelanwendung. Insbesondere betrifft die vorliegende Erfindung eine Klappenanordnung für Maskencontainer zur Anordnung in einem Standardversorgungskanal eines Flugzeugs, einen Maskencontainer für ein Sauerstoffsystem eines Flugzeugs sowie ein Flugzeug, umfassend eine entsprechende Klappenanordnung.

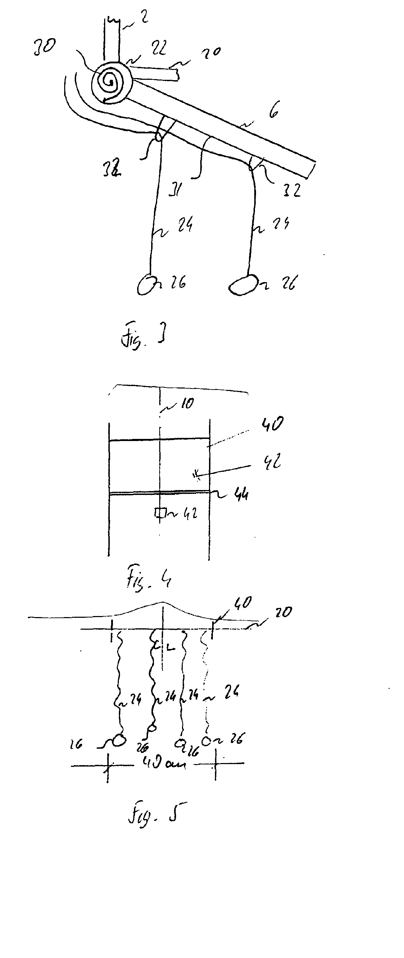

Fig. 4 zeigt eine typische Draufsicht auf einen Deckenbereich eines Flugzeugs, umfassend einen Maskencontainer einer Sauerstoffanlage, wie er heute in Flugzeugen angeordnet ist.

Wie Fig. 4 zu entnehmen ist, weist der Maskencontainer oder Behälter 40 eine einzelne Klappe 42 auf, die mittels eines Gelenks an der Deckenstruktur des Flugzeugs oder an der Struktur des Maskenbehälters angebracht ist. Eine Schwenkachse des Gelenks 44 ist im Wesentlichen senkrecht zu einer Längsachse 10 des Flugzeugs.

Fig. 5 zeigt eine Seitenansicht dieser Anordnung, wobei das Sauerstoffsystem in Fig. 5 aktiviert ist, d. h. die Klappe 42 geöffnet ist und Sauerstoffmasken 26, die über Schläuche 24 mit einer Sauerstoffquelle verbunden sind sowie aus dem Maskenbehälter 40 herausgefallen sind. Da Versorgungskanäle, in denen die Maskenbehälter angeordnet werden, im Deckenbereich 20 des Flugzeugs üblicherweise eine Breite von 40 cm aufweisen, wird bei im Wesentlichen vertikal nach unten fallenden Sauerstoffmasken lediglich ein Zugriffsbereich von etwa 40 cm sichergestellt. Dadurch sind die Sauerstoffmasken 26, wenn beispielsweise der Versorgungskanal über einem mittleren Sitz einer quer zur Flugrichtung des Flugzeugs angeordneten Dreierreihe angeordnet ist, im Wesentlichen nur über den mittleren Sitz direkt greifbar.

Gemäß JAR-Requirements ist es notwendig, dass keinerlei Zeichen 42, wie beispielsweise Fasten Seat Belt Zeichen oder No Smoking Zeichen, auch bei geöffneter Klappe 42 verdeckt sind oder aber eine zusätzlich ausreichend redundante Anzahl von Zeichen innerhalb der Kabine angebracht sind. Üblicherweise sind solche Zeichen 42 (Fig. 4) im Wesentlichen mittig in den Versorgungskanälen integriert oder aber (z.B. im Deckenbereich 20) vor und/oder nach der Klappe 42 des Maskenbehälters 40 über dem Versorgungskanal angeordnet. Um sicherzustellen, dass von jedem Sitzplatz aus die entsprechenden Zeichen sichtbar sind, ist es deswegen erforderlich, weitere (redundante) Zeichen an anderen Orten im Deckenbereich oder anderweitig im Flugzeug vorzusehen.

Das Vorsehen einer großen Anzahl von bei nicht aktiviertem Sauerstoffsystem redundanten Zeichen bedeutet einen vergrößerten Gewichtsaufwand aufgrund von Verkabelungen und physischen Zeichen.

Es ist eine Aufgabe der vorliegenden Erfindung den oben beschriebenen Maskenbehälter zu verbessern.

Gemäß einem Ausführungsbeispiel der vorliegenden Erfindung, wie in Anspruch 1 angegeben, wird die Aufgabe mittels einer Klappenanordnung für Maskencontainer zur Anordnung in einem Versorgungskanal eines Flugzeugs gelöst. Der Maskencontainer weist eine Öffnung auf. In dieser Öffnung können beispielsweise Sauerstoffmasken angeordnet sein, die bei der Auslösung des Sauerstoffsystems, z. B. aufgrund eines Druckabfalls in der Passagierkabine des Flugzeugs, aus dem Maskencontainer heraus in einen Greifbereich von Passagieren fallen müssen. Die Klappenanordnung dieses Ausführungsbeispiels umfasst eine erste Klappe und eine zweite Klappe, wobei die beiden Klappen jeweils in einen geschlossenen Zustand bringbar sind, in dem sie die Öffnung des Maskencontainers verschließen (nicht ausgelöster Zustand). Dies ist der übliche Betriebszustand; die Sauerstoffmasken sind hinter den beiden Klappen im Maskencontainer im Deckenbereich der Passagierkabine des Flugzeugs verstaut. Die erste Klappe und die zweite Klappe sind bei Aktivierung des Sauerstoffsystems, beispielsweise bei einem Druckabfall, für Testzwecke oder zur Instandhaltung, jeweils in einen geöffneten Zustand bringbar. In dem geöffneten Zustand geben die beiden Klappen die Öffnung des Maskencontainers derart frei, dass die Sauerstoffmasken aus dem Maskencontainer in den Griffbereich der Passagiere fallen können.

Ein Öffnungswinkel zwischen der ersten und der zweiten Klappe im geöffneten Zustand und einer Horizontalen ist jeweils größer als 90°.

Vorteilhaft hierbei ist, dass die Öffnungswinkel größer als 90° sind und hierdurch sichergestellt ist, dass bei Aktivierung der Maskencontainer ein größerer Zugriffsbereich für die Sauerstoffmasken erzielt wird. Überdies wird durch die seitliche Öffnung des Maskencontainers mittels zwei Klappen erzielt, dass die jeweiligen Ausmaße der Klappen kleiner sind und zusätzlich durch die seitlich gedrehte Führung keine herunterhängende Klappe die Sicht auf das nächstliegende NSFS (No Smoking, Fasten Seatbelts) Zeichen verhindert, Hierdurch kann sichergestellt werden, dass ein Sichtbereich von Passagieren, der durch geöffnete Klappen verdeckt wird, verringert wird, wodurch weniger redundante Zeichen, wie beispielsweise No Smoking Zeichen oder Fasten Seat Belt Zeichen etc., vorzusehen sind. Dies ermöglicht beispielsweise eine Gewichtsersparnis und eine Optimierung der Anordnung der NSFS-Zeichen.

Gemäß einem weiteren vorteilhaften Ausführungsbeispiel der vorliegenden Erfindung, wie in Anspruch 2 angegeben, weisen die erste und die zweite Klappe Schwenkachsen auf, die im Wesentlichen parallel zu der Längsachse des Flugzeugs sind.

Durch die Öffnung der ersten und zweiten Klappe zur Seite hin, werden Zeichen, wie Fasten Seat Belt, No Smoking etc. und Bauteile wie Lautsprecher bei Aktivierung des Sauerstoffsystems an den üblichen Anordnungspunkten im Flugzeug nicht mehr verdeckt. Auf diese Art und Weise ist es nicht erforderlich, redundante Zeichen sowie zusätzliche Lautsprecher vorzusehen, wodurch eine Gewichtseinsparung erzielt werden kann.

Gemäß einem weiteren Ausführungsbeispiel der vorliegenden Erfindung, wie in Anspruch 3 angegeben, sind Haltemittel (Spannfeder) an der Innenseite der Klappen vorgesehen, um die Klappen jeweils in dem geöffneten Zustand zu halten.

Vorteilhaft verhindert dies eine unkontrollierte Bewegung der Klappen nach der Öffnung.

Gemäß einem weiteren Ausführungsbeispiel der vorliegenden Erfindung nach Anspruch 4 liegen die Öffnungswinkel in einem Bereich von etwa 100° bis etwa 180°.

Vorteilhaft ermöglicht dies einen weiten Öffnungswinkel der Klappen.

Gemäß einem weiteren Ausführungsbeispiel der Klappenanordnung nach Anspruch 5 sind Schlaufen an den Innenflächen der Klappen angeordnet, die im geschlossenen Zustand in den Maskencontainer hineinweisen. Durch die Schlaufen sind Schläuche der Sauerstoffmasken hindurchgeführt. Wird nun das Sauerstoffsystem aktiviert und werden die Klappen weiter als 90° geöffnet, vorzugsweise bis zu 180°, werden die Schlaufen bei geöffneten Klappen seitlich aus dem Bereich des Maskencontainers herausgeführt, wodurch ein Zugriffsbereich verdoppelt werden kann. Bei einem Standardversorgungskanal mit einer Breite von 40 cm, in dem ein Maskenbehälter mit 40 cm Breite angeordnet ist, kann nun ein Zugriffsbereich von etwa 80 cm erzielt werden. Dadurch wird ein Zugriff auf die Sauerstoffmasken für Passagiere in Sitzen, die seitlich zum Versorgungskanal versetzt sind, optimaler ermöglicht. Vorteilhaft ermöglicht dies, dass die Maskenerreichbarkeit auch bei neuen Sitzlayoutvarianten, wie z. B. Staggert Concept, Center 5 Abrest etc., die Erreichbarkeit wesentlich verbessert .

Weitere vorteilhafte Ausführungsbeispiele ergeben sich aus den weiteren Ansprüchen.

Im Folgenden werden mit Verweis auf die Figuren bevorzugte Ausführungsbeispiele der vorliegenden Erfindung beschrieben.

Fig. 1 zeigt eine Draufsicht auf ein Ausführungsbeispiel einer Klappenanordnung eines Maskencontainers mit geschlossenen Klappen im Deckenbereich der Passagierkabine eines Flugzeugs gemäß der vorliegenden Erfindung.

Fig. 2 zeigt eine Seitenansicht des Ausführungsbeispiels von Fig. 1 mit geöffneten Klappen gemäß der vorliegenden Erfindung.

Fig. 3 zeigt eine Schnittansicht eines Details des Ausführungsbeispiels von Fig. 1 gemäß der vorliegenden Erfindung.

Fig. 4 zeigt eine Draufsicht auf einen bekannten Maskenbehälter mit einer Klappe.

Fig. 5 zeigt eine Seitenansicht der Anordnung von Fig. 4 mit aktiviertem Sauerstoffsystem.

In der folgenden Beschreibung der Figuren werden für gleiche oder sich entsprechende Elemente die gleichen Bezugsziffern verwendet.

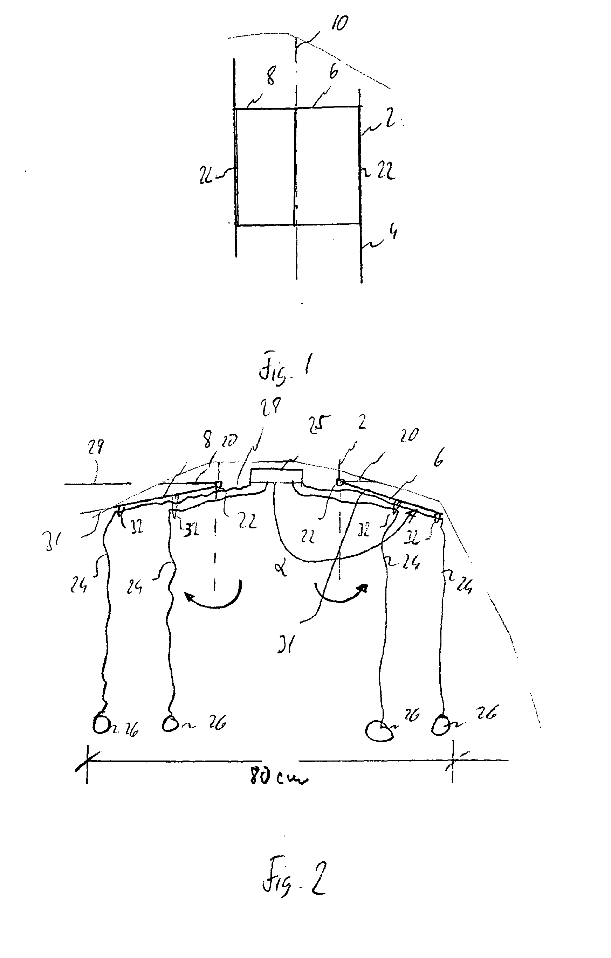

Fig. 1 zeigt eine Draufsicht auf ein Ausführungsbeispiel einer Klappenanordnung eines Maskenbehälters, der in einem Versorgungskanal im Deckenbereich 20 einer Passagierkabine eines Flugzeugs angeordnet ist. Die Bezugsziffer 2 bezeichnet den Maskencontainer, der in einem Versorgungskanal 4 angeordnet ist. Solche Versorgungskanäle weisen üblicherweise eine Breite von etwa 40 cm auf. Die Bezugsziffer 10 bezeichnet die Längsachse des Flugzeugs. Wie Fig. 1 zu entnehmen ist, erstreckt sich der Versorgungskanal 4 im Wesentlichen entlang der Längsachse 10 des Flugzeugs. Eine Öffnung des Maskencontainers 2 ist mittels einer ersten Klappe 6 und einer zweiten Klappe 8 bei nicht aktiviertem Sauerstoffsystem abgedeckt. Die Klappen 6 und 8 sind in geschlossenem Zustand vorzugsweise bündig mit benachbarten Deckenstrukturen der Passagierkabine des Flugzeugs. Die Klappen 6 und 8 sind mittels Gelenkanordnungen 22 an Seitenbereichen des Maskenbehälters 2 oder an benachbarten Deckenstrukturen befestigt. Die Gelenke 22 weisen Schwenkachsen auf, die im Wesentlichen parallel zu der Längsachse 10 des Flugzeugs sind. Vorzugsweise sind die Klappen 6 und 8 so ausgestaltet, dass jede Klappe im Wesentlichen die Hälfte der Öffnung des Maskenbehälters 2 abdeckt. Jedoch kann, je nachdem welcher Zugriffsbereich für Sauerstoffmasken, die in dem Maskenbehälter 2 angeordnet sind, gewünscht ist, auch eine asymmetrische Ausgestaltung der Klappen 6 und 8 vorteilhaft sein.

Fig. 2 zeigt eine Seitenansicht des Ausführungsbeispiels von Fig. 1, wobei die Klappen 6 und 8 geöffnet sind und die Sauerstoffmasken 26, die mittels Schläuchen 24 mit einer Sauerstoffquelle 25 verbunden sind, derart aus dem Deckenbereich 20 der Passagierkabine des Flugzeugs herunterhängen, dass sie für Passagiere in den darunter liegenden Sitzen möglichst einfach greifbar sind. Der in Fig. 2 dargestellte Zustand kann auch als aktivierter Zustand oder geöffneter Zustand bezeichnet werden.

Wie Fig. 2 zu entnehmen ist, sind die Klappen 6 und 8 im Wesentlichen so weit geöffnet, dass ein Öffnungswinkel α zwischen einer Horizontalen 29 und den Klappen größer ist als 90°. Vorzugsweise bewegt sich der Öffnungswinkel in einem Bereich von 100° bis 180°. In dem in Fig. 2 gezeigten Ausführungsbeispiel beträgt der Öffnungswinkel in etwa 170° .

Wie Fig. 2 zu entnehmen ist, sind an Innenflächen 31 der Klappen, die bei geschlossenem Zustand in den Maskencontainer 2 hineinweisen, Schlaufen 32 vorgesehen, durch die Schläuche 24 der Sauerstoffmasken hindurchgeführt sind. Dadurch werden beim Öffnen der Klappen 6 und 8 die Schläuche 24 der Sauerstoffmasken 26 mit den Klappen 6 und 8 mitgenommen, so dass die Sauerstoffmasken 26, die aufgrund ihrer Schwerkraft im Wesentlichen senkrecht nach unten hängen, von Orten herunterhängen, die in der Draufsicht außerhalb des Versorgungskanals 4 liegen.

Im Vergleich zu dem bekannten Maskencontainer, der mit Verweis auf die Fig. 4 und 5 beschrieben worden ist, kann ein Zugriffsbereich, d. h. ein Abstand zwischen den äußersten Sauerstoffmasken bei geöffneten Klappen 6 und 8 verdoppelt werden. Gemäß der vorliegenden Erfindung wird beispielsweise bei einer Versorgungskanalbreite von 40 cm und damit einer Breite von 40 cm der Öffnung 28 ein Zugriffsbereich von etwa 80 cm erreicht.

Fig. 3 zeigt eine seitliche Schnittansicht eines Details des in Fig. 1 und 2 dargestellten Ausführungsbeispiels. Wie Fig. 3 zu entnehmen ist, ist in dem Gelenk 22 ein Mittel 30 vorgesehen, das die Klappe 6 in dem geöffneten Zustand hält (federgespannt). Dies kann beispielsweise eine Feder sein. Vorzugsweise ist die Feder im geschlossenen Zustand vorgespannt. Dann genügt ein Entriegeln der Klappe und die Klappe wird automatisch in den geöffneten Zustand bewegt und dort gehaltert. Ein ähnliches Mittel 30 ist auch für die Klappe 6 vorgesehen.

Vorteilhaft wird durch die Anordnung der Schwenkachsen der Klappen 6 und 8 bei Auslösung des Sauerstoffsystems, beispielsweise aufgrund eines Druckabfalls in der Passagierkabine des Flugzeugs, verhindert, dass Zeichen, wie beispielsweise Fasten Seat Belt Zeichen oder ähnliche Zeichen, verdeckt werden. Auch wird ermöglicht, dass keine Lautsprecher in den üblichen Anordnungsbereichen verdeckt werden. Auf diese Weise ist es nicht erforderlich redundante Zeichen und zusätzliche Lautsprecher vorzusehen, wodurch eine Gewichtsersparnis erzielt wird.

## Patentansprüche

1. Klappenanordnung für Maskencontainer (2) zur Anordnung in einem Versorgungskanal (4) eines Flugzeugs, wobei der Maskencontainer (2) eine Öffnung (28) aufweist, und wobei die Klappenanordnung umfasst:
eine erste Klappe (6) und eine zweite Klappe (8);
wobei die erste Klappe (6) und die zweite Klappe (8) jeweils in einen geschlossenen Zustand bringbar sind, in dem die erste und zweite Klappe (6, 8) die Öffnung (28) des Maskencontainers (2) verschließen;
wobei die erste Klappe (6) und die zweite Klappe (8) jeweils in einen geöffneten Zustand bringbar sind, in dem die erste und zweite Klappe (6, 8) die Öffnung (28) des Maskencontainers (2) freigeben; und
wobei in geöffnetem Zustand ein erster und zweiter Öffnungswinkel zwischen der ersten und zweiten Klappe und einer Horizontalen (29) jeweils größer als 90 Grad ist.

2. Klappenanordnung nach Anspruch 1,
wobei das Flugzeug eine Längsachse (10) aufweist;
wobei die erste Klappe (6) eine erste Schwenkachse aufweist;
wobei die zweite Klappe (8) eine zweite Schwenkachse ausweist; und
wobei die erste und die zweite Schwenkachse im Wesentlichen parallel zu der Längsachse (10) sind.

3. Klappenanordnung nach einem der Ansprüche 1 oder 2,
wobei ein erstes Haltemittel (30) vorgesehen ist um die erste Klappe (6) in dem geöffneten Zustand zu haltern; und
wobei ein zweites Haltemittel (30) vorgesehen ist um die zweite Klappe (8) in dem geöffneten Zustand zu haltern.

4. Klappenanordnung nach einem der Ansprüche 1 bis 3,
wobei der erste und der zweite Öffnungswinkel zwischen der ersten und zweiten Klappe (6, 8) in geöffnetem Zustand und einer Horizontalen (29) jeweils in einem Bereich von etwa 100 Grad bis etwa 180 Grad liegt.

5. Klappenanordnung nach einem der Ansprüche 1 bis 4,
wobei der Maskencontainer (2) zur Aufbewahrung von Sauerstoffmasken (26) in einem Versorgungskanal im Deckenbereich (20) eines Passagierbereichs des Flugzeugs angeordnet ist;
wobei die Sauerstoffmasken (26) mit einem Schlauch (24) mit einem Sauerstoffsystem (25) des Flugzeugs verbunden sind;
wobei die erste und die zweite Klappe (6, 8) jeweils eine Innenfläche (31) aufweisen, die, wenn die erste und zweite Klappe (6, 8) in dem geschlossenen Zustand sind, in die Öffnung (28) weist; und
wobei an der Innenfläche (31) von zumindest einer der ersten und zweiten Klappe (6, 8) zumindest eine Schlaufe (32) angebracht ist, durch die der Schlauch (24) hindurchführbar ist.

6. Maskencontainer für ein Sauerstoffsystem eines Flugzeugs,
wobei der Maskencontainer (2) eine Klappenanordnung nach einem der Ansprüche 1 bis 5 aufweist.

7. Flugzeug umfassend eine Klappenanordnung nach einem der Ansprüche 1 bis 5.
